# EUROPEAN PATENT SPECIFICATION

(11) **EP 1 654 321 B1**
(45) Date of publication and mention of the grant of the patent: **10.10.2012**
(21) Application number: 03818130.1
(22) Date of filing: 09.12.2003
(51) Int. Cl.: C08L 25/06, C08K 5/521, C08K 5/5317, C08L 71/12, C08L 51/04

(54) **FLAMEPROOF RUBBER-REINFORCED STYRENIC RESIN COMPOSITION**
FLAMMFESTE KAUTSCHUKVERSTÄRKTE STYROLHARZZUSAMMENSETZUNG
COMPOSITION DE RESINE STYRENIQUE IGNIFUGE RENFORCEE PAR DU CAOUTCHOUC

(30) Priority: 14.08.2003 KR 2003056524
(43) Date of publication of application: 10.05.2006
(73) Proprietor: CHEIL INDUSTRIES INC., Gumi-si, Gyeongsangbuk-do 730-710 (KR)
(72) Inventor: BAE, Su Hak, Seongdong-gu, Seoul 133-112 (KR); YANG, Jae Ho, Gunpo-si, Gyeonggi-do 435-040 (KR); HONG, Sang Hyun, Guro-gu, Seoul 152-050 (KR)
(74) Representative: Bublak, Wolfgang
(86) International application number: PCT/KR2003/002689
(87) International publication number: WO 2005/017030

(56) References cited:
- EP-A1- 0 496 120
- EP-A2- 0 149 813
- WO-A1-00/17268
- DE-A1- 3 526 549
- JP-A- 10 195 287
- JP-A- 60 079 048
- JP-A- 61 009 450
- KR-A- 2001 083 602
- US-A- 4 397 759
- US-B1- 6 262 166

## Description

### Field of the Invention

The present invention relates to an environment-friendly thermoplastic resin composition with good flame retardancy. More particularly, the present invention relates to a flameproof thermoplastic resin composition with good heat resistance and impact resistance by employing a ring-shaped alkyl phosphonic acid ester compound to rubber modified polystyrene resin.

### Background of the Invention

A styrenic resin is excellent in mold processability and mechanical properties, therefore, the resin has been widely applied to most of electric or electronic goods. However the styrenic resin is extremely easily flammable, which can easily make a fire accident. In this regard, the resin is subjected to various mandatory controls on their flammability for the safety reason in United States, Japan and Europe and is required to have high flame retardancy to meet the Underwriter's Laboratories Standard for the use of the housing of electric appliances.

A widely known method for flame retardancy is that a halogen-containing compound and an antimony-containing compound are added to a rubber modified styrene-containing resin to give a good flame-retardant property. The examples of the halogen-containing compounds used in the method above are, for example, polybromodiphenyl ether, tetrabromobisphenol-A, epoxy compounds substituted by bromine, chlorinated polyethylene, etc. An antimony trioxide or an antimony pentaoxide is commonly used as an antimony-containing compound.

The methods for improving the flame-retardant property by applying a halogen- and antimony-containing compound have advantages such as easy acquirement of the flame-retardant property and no degradation of the physical properties. However, the disadvantages could be observed that the ' halogen-containing compound results in the corrosion of the mold itself by the hydrogen halide gases released during the molding process and is fatally harmful due to the toxic gases liberated in case of fire. Especially, since a polybromodiphenyl ether, mainly used for a halogen-containing flame retardant, can produce toxic gases such as dioxin or furan during combustion, a major concern in this field is to develop a flame retardant which is prepared without a halogen-containing compound.

U.S. patent No. 4,526,917 discloses use of a TPP and a mono phosphoric acid ester compound having a mesityl group to a base resin comprising a polyphenylene ether resin and a styrenic resin to improve flame retardancy of the resin composition. However, in the patent, the amount of polyphenylene ether is more than 20 %, which makes it difficult to obtain dripping flame retardancy while maintaining its flowability. Moreover, the heat resistance of the resin composition is lowered due to addition of TPP.

Japanese Patent Laid-open No. 7-043769 discloses that the use of phosphoric acid ester compound having a substituent containing 12 to 25 carbon atoms derived from TPP may obtain flame-retardancy of V2 and improved volatility at 250 °C.

U.S. patent Nos. 3,789,091 and 3,849,368 disclose that a ring-type phosphonic acid ester compound can be used as a flame retardant to a polyethylene terephthalate, PAN, polyurethane, polystyrene or nylon.

Patent document EP 0 496 120 A1 discloses a self-extinguishing, halogen-free flame-protected moulding mass consisting of a polyphenylene ether, a vinylaromatic polymer, a flame retardant agent build up from at least a phosphorous-containing compound, a triazine derivative and an aromatic sulphonamide, and other additives.

Patent document WO 00/17268 discloses halogen-free flame retardant polymer compositions made from an ABS resin as the sole resin, and a P, P'-dihydrocarbyl pentaerythrityl diphosphonate.

Patent document JP 61009450 A discloses a resin composition comprising a polyphenylene ether resin and a styrene resin wherein a phosphonate compound solely or in combination with another phosphonate compound or also with an aromatic phosphate is incorporated.

Patent document DE 35 26 549 A1 discloses a self-extinguishing halogen-free moulding composition containing halogen-free thermoplastic resin, an elastomer, a halogen-free thermoplastic polyphenylene ether, a phosphorus-containing compound, and a copolymer being a comb polymer.

Patent document EP 0 149 813 A2 discloses a halogen-free, fire-resistant thermoplastic moulding mass consisting of a halogen-free thermoplastic resin, a phenol-aldehyde resin, a nitrogen-containing organic compound and a phosphorous-containing organic compound.

In view of the above-mentioned patents, there have been many attempts to provide flame retardancy by using a phosphoric acid ester compound as a halogen -free flame retardant, but none of the publication discloses a resin composition with good mechanical strength, heat resistance and dripping flame-retardancy without polyphenylene ether by using only phosphorus-based compound and rubber modified polystyrene resin.

So, the present inventors have developed a flame retardant resin composition which has good flame retardancy as well as mechanical strength and heat resistance by employing a ring-shaped alkyl phosphonic acid ester compound and an aromatic phosphoric acid ester compound as a flame retardant to a base resin consisting of rubber modified polystyrene resin. The resin composition of the present invention may further contain not more than 10 % by weight of polyphenylene ether optionally.

### Objects of the Invention

An object of the present invention is to provide a flame retardant thermoplastic resin composition having stability for the fire as well as good color stability.

Another object of the present invention is to provide an environment-friendly flame retardant styrenic resin composition which does not cause toxic gases in case of fire.

A further object of the present invention is to provide a flame retardant styrenic resin composition with good heat resistance, mechanical strength and heat stability useful for the housing of electric appliances.

Other objects and advantages of this invention will be apparent from the ensuing disclosure and appended claims.

### Summary of the Invention

The flameproof thermoplastic resin composition according to the present invention comprises (A) 70 to 100 parts by weight of a rubber-modified polystyrene resin; (B) 0.1 to 10 parts by weight of a ring-shaped alkyl phosphonic acid ester compound; and (C) 0.1 to 10 parts by weight of a aromatic phosphoric acid ester compound. The flameproof thermoplastic resin composition of the present invention may further contain 0 to 10 parts by weight of polyphenylene ether optionally.

### Detailed Description of the Invention

### (A) Rubber-modified Polystyrene Resin

The rubber-modified polystyrene resin used in the present invention as a base resin can be prepared by blending a rubber, an aromatic mono-alkenyl monomer and/or alkyl ester monomer and polymerizing with heat or a polymerization initiator.

The Rubber which can be used in this invention includes polybutadiene, polyisoprenes, styrene-butadiene copolymers and alkylacrylic rubbers. The amount of the rubber is 3 to 30 parts by weight, preferably 5 to 15 parts by weight.

Further, the monomer used in rubber-modified polystyrene is one or more monomer selected from the group consisting of aromatic mono-alkenyl monomer, alkyl ester monomers of acrylic acid or methacrylic acid and is used in an amount of 70-97 parts by weight, preferably 85-95 parts by weight.

The resin composition of the present invention can be polymerized with heat or a polymerization initiator. The polymerization initiator used in the present invention may be one or more selected from the group consisting of organic peroxides such as benzoyl peroxide, t-butyl hydroperoxide, acetyl peroxide and cumene hydroperoxide or azo compounds such as azobisisobutyronitrile (AIBN).

The rubber-modified polystyrene resin of the present invention can be produced by a known polymerization method such as bulk polymerization, suspension polymerization, emulsion polymerization or combination thereof. Among them, the bulk polymerization is preferred. To acquire optimum physical properties in consideration of the blend of rubber-modified polystyrene resin and polyphenylene ether, the average size of rubber particles is preferably in the range of from 0.5 to 2.0 µm.

### (B) Ring-shaped Alkyl Phosphonic Acid Ester Compound

The ring-shaped alkyl phosphonic acid ester compound of the present invention is represented by the following chemical Formula ( I ): 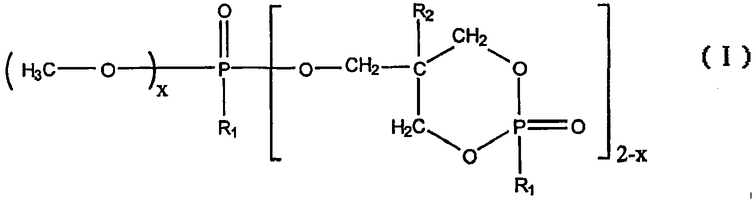 wherein R₁ and R₂ are independently of each other C₁-C₄ alkyl and x is 0 or 1.

Examples of the ring-shaped alkyl phosphonic acid ester compound having the structural formula ( I ) include methyl-bis(5-ethyl-2-methyl-1,3,2-dioxaphorinan- 5yl) methyl methyl phosphonic acid ester P-oxide, methyl-bis(5-ethyl-2-methyl-1,3,2-dioxaphorinan-5yl) phosphonic acid ester P, P'-dioxide.

The ring-shaped alkyl phosphonic acid ester compound (B) of present invention is used in the amount of from 0.1 to 10 parts by weight, preferably 0.5 to 6 parts by weight, more preferably 0.5 to 2 parts by weight per 70 to 100 parts by weight of the rubber modified styrenic resin (A). If the amount of the ring-shaped alkyl phosphonic acid ester compound is added less than 0.1 parts by weight, the resin composition has poor flame retardancy. On the other hand, if the amount of the ring-shaped alkyl phosphonic acid ester compound is more than 10 parts by weight, heat resistance of the resin composition is lowered.

### (C) Aromatic Phosphoric Acid Ester Compound

The aromatic phosphoric acid ester compound used in the present invention is a compound having the following structural formular (II): 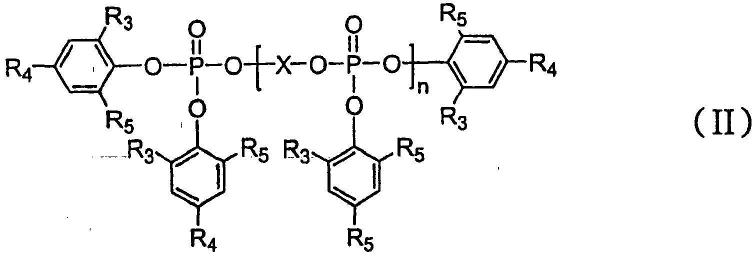 wherein R₃, R₄ and R₅ independently of one another are hydrogen or C₁-C₄ alkyl; X is a C₆-C₂₀ aryl group or alkyl-substituted C₆-C₂₀ aryl group that are derivatives from a dialcohol derivative such as resorcinol, hydroquinol and bisphenol-A; and n is 0∼4.

Where n is 0, the compound represented in the structural formular (II) is triphenyl phosphate, tri(2,6-dimethyl) phosphate, and where n is 1, the compounds include resorcinolbis(diphenyl) phosphate, resorcinolbis(2,6-dimethyl phenyl) phosphate, resorcinolbis(2,4-ditertiary butyl phenyl) phosphate, hydroquinolbis (2,6-dimethyl phenyl) phosphate, hydroquinolbis(2,4-ditertiary butyl phenyl) phosphate .

In the present invention, the aromatic phosphoric acid ester compound can be used in the amount of 0.1 to 10 parts by weight, preferably 0.5 to 6 parts by weight. The aromatic phosphoric acid ester compounds can be used alone or in combination therewith.

### (D) Polyphenylene Ether

Polyethylene ether is added to the rubber-modified polystyrene resin to improve flame retardancy and heat resistance. Examples of the polyphenylene ether resin include poly(2,6-dimethyl- 1,4-phenylene)ether, poly(2,6-diethyl-1,4-phenylene)ether, poly(2,6-dipropyl -1,4-phenylene)ether, poly(2-methyl-6-ethyl-1,4-phenylene)ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-pheylene) ether and poly(2,3,5-triethyl-1,4-phenylene) ether. Preferably, copolymer of poly(2,6-dimethyl-1,4-phenylene) ether and poly(2,3,6-trimethyl-1,4-phenylene) ether, and poly(2,6-dimethyl-1,4-phenylene) ether are preferably used, more preferably poly(2,6-dimethyl-1,4-phenylene) ether is preferably used.

The degree of polymerization of polyphenylene ether is not limited specifically, but considering heat-stability or processability of the resin composition, it is preferable that the viscosity of polypheylene ether is in the range of 0.2 to 0.8 measured in chloroform solvent at 25°C.

The flame retardant resin composition of the present invention may further contain conventional additives, for example, plasticizers, heat stabilizers, anti-oxidants, light stabilizers, compatibilizers, pigment, dye and/or inorganic filler. The inorganic filler can be asbestos, glass fiber, talc, ceramic and sulfonate . The additives are employed in the amount of 0 to 30 parts by weight on the basis of 100 parts by weight of the base resin.

The present invention may be better understood by reference to the following examples that are intended for the purpose of illustration and are not to be construed as in any way limiting the scope of the present invention, which is defined in the claims appended hereto.

### Examples

The components to prepare flameproof thermoplastic resin compositions in Examples and Comparative Examples are as follows:

### (A) Rubber Modified Polystyrene Resin

The rubber modified polystyrene resin of Cheil Industries Inc. (Product name: HR-1380F) was used. The particle size of butadiene rubber was 1.5 µm. And the rubber content was 6.5 % by weight.

### (B) Ring-shaped Alkyl Phosphonic Acid Ester Compound

Antiblaze 1045 of Rhodia Co. which contains 20.8 % of phosphorus [a mixture of 8 % by weight of methyl-bis(5-ethyl-2-methyl-1,3,2-dioxaphorinan-5yl) methyl methyl phosphonic acid ester P-oxide and 85 % by weight of methyl-bis (5-ethyl-2-methyl-1,3,2-dioxaphorinan-5yl) phosphonic acid ester P, P'-dioxide] was used.

### (C) Aromatic Phosphoric Acid Ester Compound

Resorcinol bis (2,6-dimethylphenyl)phosphate produced by Daihachi Chemical of Japan (product name: PX200) was used.

### (D) Polyphenylene Ether Resin (PPE)

A poly(2,6-dimethyl-1,4-phenylene)ether by Asahi Co. of Japan (Product name: P-402) was used. The particles had the average size of several microns (µm) and were in the form of powder.

### Examples 1∼4

The components as shown in Table 1 were mixed and the mixture was extruded at 200∼280 °C with a conventional twin screw extruder in pellets. The resin pellets were dried at 80 °C for 3 hours, and molded into test specimens using a 6 oz injection molding machine at 180∼280 °C and barrel temperature of 40∼80 °C.

### Comparative Example 1

Comparative Examples 1 was conducted in the same manner as in Example 1 except that 6 parts by weight of ring-shaped alkyl phosphonic acid ester compound alone was used as a flame retardant.

### Comparative Examples 2-3

Comparative Examples 2-3 were conducted in the same manner as in Example 1 except that resorcinol bis (2,6-dimethylphenyl)phosphate alone was used as a flame retardant.

### Comparative Example 4

Comparative Example 4 was conducted in the same manner as in Example 3 except that 6 parts by weight of resorcinol bis (2,6-dimethylphenyl)phosphate alone was used as a flame retardant.

### Comparative Example 5

Comparative Example 5 was conducted in the same manner as in Example 3 except that 3 parts by weight of ring-shaped alkyl phosphonic acid ester compound alone was used as a flame retardant.

The physical properties of the specimens in the Examples 1∼4 and the Comparative Examples 1∼5 were measured by the following manners:
(1) Flame retardancy: The flame retardancy was measured in accordance with UL94VB with a thickness of 1/8".
(2) Izod impact strength: The notch Izod impact strength was measured in accordance with ASTM 256A (1/8" notched).
(3) Heat resistance: The vicat softening temperature was measured in accordance with ASTM D1525 under load of 5 kg.
(4) Color and heat stability: The color stability was measured in accordance with ASTM D4459 based on cream color.

The test results are presented in Table 1.

**Table 1**

| | Examples | | | | Comparative Examples | | | | |
|---|---|---|---|---|---|---|---|---|---|
| | 1 | 2 | 3 | 4 | 1 | 2 | 3 | 4 | 5 |
| (A) HIPS, | 100 | 100 | 90 | 90 | 100 | 100 | 100 | 90 | 90 |
| (B) ring-shaped alkyl phosphonic acid ester compound | 1 | 2 | 1 | 2 | 6 | - | - | - | 3 |
| (C) resorcinol bis (2,6-dimethylphenyl)phosphate | 2 | 4 | 2 | 4 | - | 10 | 6 | 6 | - |
| (D)PPE | - | - | 10 | 10 | - | - | - | 10 | 10 |
| UL 94 flame retardancy (1/8") | V2 | V2 | V2 | V2 | V2 | V2 | Fail | Fail | V2 |
| Izod impact strength 1/8" (kgf·cm/cm) | 14 | 10 | 14 | 12 | 13 | 8 | 9 | 11 | 15 |
| Vicat Softening Temperature (°C) | 84 | 79 | 89 | 84 | 78 | 72 | 79 | 83 | 88 |
| Color and heat stability (D65 dE) | 0.2 | 0.3 | 0.2 | 0.35 | 0.6 | 0.5 | 0.2 | 0.2 | 0.4 |

As shown above, the resin compositions employing both ring-shaped alkyl phosphonic acid ester compound and aromatic phosphoric acid ester compound as a flame retardant show good flame retardancy and heat resistance without no deterioration of impact strength compared to those employing ring-shaped alkyl phosphonic acid ester compound or an aromatic phosphoric acid ester compound alone.

The present invention can be easily carried out by an ordinary skilled person in the art. Many modifications and changes may be deemed to be with the scope of the present invention as defined in the following claims.

## Claims

1. A flame retardant rubber-modified polystyrene resin composition comprising:
(A) 70 to 100 parts by weight of a rubber-modified polystyrene resin; (B) 0.1 to 10 parts by weight of a ring-shaped alkyl phosphonic acid ester
compound represented by the following formula ( I ): and 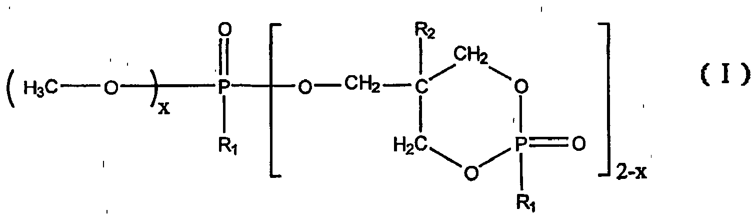 wherein R₁ and R₂ are independently of each other C₁-C₄ alkyl and x is 0 or 1; and
(C) 0.1 to 10 parts by weight of a aromatic phosphoric acid ester compound represented by the following formula (II): 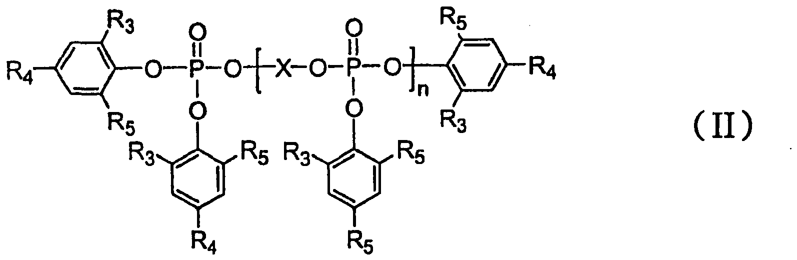 wherein R₃, R₄ and R₅ independently of one another are hydrogen or C₁-C₄ alkyl; X is a C₆-C₂₀ aryl group or alkyl-substituted C₆-C₂₀ aryl group that are derivatives from a dialcohol derivative such as resorcinol, hydroquinol and bisphenol-A; and n is 0∼4.

2. The flame retardant rubber-modified polystyrene resin composition as defined in claim 1, wherein said rubber is selected from the group consisting of polybutadienes, polyisoprenes, styrene-butadiene copolymers and alkylacrylic rubbers; and the monomer used in rubber-modified polystyrene is selected from the group consisting of aromatic mono-alkenyl monomer, alkyl ester monomers of acrylic acid or methacrylic acid.

3. The flame retardant rubber-modified polystyrene resin composition as defined in claim 1, further comprising 0 to 10 parts by weight of a polyphenylene ether (D).

4. The flame retardant rubber-modified polystyrene resin composition as defined in claim 3, said polyphenylene ether (D) is poly(2,6-dimethyl- 1,4-phenylene)ether.

5. The flame retardant rubber-modified polystyrene resin composition as defined in claim 1, which further comprises 0 to 30 parts by weight of an additive selected from the group consisting of plasticizers, heat stabilizers, anti-oxidants, light stabilizers, compatibilizers, pigment, dye and/or inorganic filler.

## Patentansprüche

1. Flammhemmende, kautschukmodifizierte Polystyrolharzzusammensetzung, umfassend:
(A) 70 bis 100 Gewichtsteile eines kautschukmodifizierten Polystyrolharzes;
(B) 0,1 bis 10 Gewichtsteile einer ringförmigen Alkylphosphonsäureesterverbindung der folgenden Formel (I): 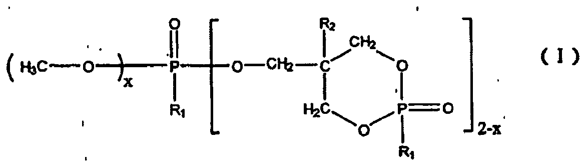 und wobei R₁ und R₂ unabhängig voneinander C₁-C₄-Alkyl sind und x 0 oder 1 ist; und
(C) 0,1 bis 10 Gewichtsteile einer aromatischen Phosphorsäureesterverbindung der folgenden Formel (II) 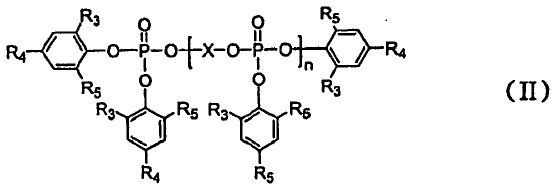 wobei R₃, R₄ und R₅ unabhängig voneinander Wasserstoff oder C₁-C₄-Alkyl sind; X eine C₆-C₂₀ Arylgruppe oder alkylsubstituierte C₆-C₂₀-Arylgruppe ist, bei welchen es sich um Derivate eines Dialkoholderivats wie Resorcinol, Hydrochinol und Bisphenol-A handelt; und n 0∼4 ist.

2. Flammhemmende, kautschukmodifizierte Polystyrolharzzusammensetzung nach Anspruch 1, wobei der Kautschuk ausgewählt ist aus der Gruppe, bestehend aus Polybutadienen, Polyisoprenen, Styrol-Butadien-Copolymeren und Alkylacrylkautschuks; und das im kautschukmodifizierten Polystyrol verwendete Monomer ausgewählt ist aus der Gruppe, bestehend aus aromatischem Monoalkenylmonomer, Alkylestermonomeren von Acrylsäure oder Methacrylsäure.

3. Flammhemmende, kautschukmodifizierte Polystyrolharzzusammensetzung nach Anspruch 1, des Weiteren umfassend 0 bis 10 Gewichtsteile eines Polyphenylenethers (D).

4. Flammhemmende, kautschukmodifizierte Polystyrolharzzusammensetzung nach Anspruch 3, wobei der Polyphenylenether (D) Poly(2,6-dimethyl-1,4-phenylen)ether ist.

5. Flammhemmende, kautschukmodifizierte Polystyrolharzzusammensetzung nach Anspruch 1, die des Weiteren 0 bis 30 Gewichtsteile eines Zusatzes umfasst, der ausgewählt ist aus der Gruppe, bestehend aus Weichmachern, Wärmestabilisatoren, Antioxidationsmitteln, Lichtstabilisatoren, Verträglichmachem, Pigment, Farbstoff und/oder anorganischem Füllstoff.

## Revendications

1. Composition de résine de poly(styrène) ignifuge modifié par du caoutchouc comprenant :
(A) 70 à 100 parties en poids d'une résine de poly(styrène) modifié par du caoutchouc ;
(B) 0,1 à 10 parties en poids d'un composé ester d'acide alkylphosphonique en forme de cycle représenté par la formule (I) suivants : 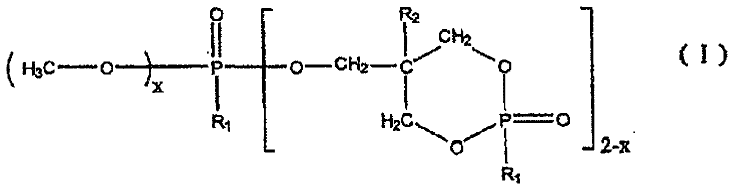 dans laquelle R₁ et R₂ sont indépendamment l'un de l'autre un alkyle en C₁ à C₄ et x vaut 0 ou 1 ; et
(C) 0,1 à 10 parties en poids d'un composé ester d'acide phosphorique aromatique représenté par la formule (II) suivante : 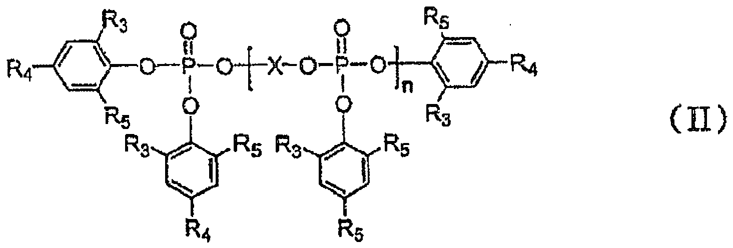 dans laquelle R₃, R₄ et R₅ indépendamment les uns des autres sont un atome d'hydrogène ou un alkyle en C₁ à C₄ ; X est un groupe aryle en C₆ à C₂₀ ou un groupe aryle en C₆ à C₂₀ substitué par un alkyle qui sont des dérivés d'un dérivé dialcool tel que le résorcinol, l'hydroquinol et le bisphénol A ; et n vaut 0 à 4.

2. Composition de résine de poly(styrène) ignifuge modifié par du caoutchouc selon la revendication 1, dans laquelle ledit caoutchouc est choisi dans le groupe constitué par les poly(butadiènes), les poly(isoprènes), les copolymères de styrène-butadiène et les caoutchoucs alkylacryliques ; et le monomère utilisé dans le poly(styrène) modifié par du caoutchouc est choisi dans le groupe constitué par un monomère alcényle monoalcényle aromatique, des monomères ester d'alkyle d'acide acrylique ou d'acide méthacrylique.

3. Composition de résine de poly(styrène) ignifuge modifié par du caoutchouc selon la revendication 1, comprenant en outre 0 à 10 parties en poids d'un poly(phénylèneéther) (D).

4. Composition de résine de poly(styrène) ignifuge modifié par du caoutchouc selon la revendication 3, dans laquelle ledit poly(phénylèneéther) (D) est le poly(2,6-diméthyl-1,4-phénylène)éther.

5. Composition de résine de poly(styrène) ignifuge modifié par du caoutchouc selon la revendication 1, qui comprend en outre 0 à 30 parties en poids d'un additif choisi dans le groupe constitué par des plastifiants, des stabilisants thermiques, des antioxydants, des photostabilisants, des compatibilisants, un pigment, un colorant et/ou une charge inorganique.
